# EUROPÄISCHE PATENTANMELDUNG

(11) **EP 0 667 489 A2**
(43) Veröffentlichungstag der Anmeldung: **16.08.1995**
(21) Anmeldenummer: 95101661.7
(22) Anmeldetag: 08.02.1995
(51) Int. Cl.: F23G 5/02

(54) **Verfahren und Vorrichtung zur Konditionierung von Abfällen vor einer Müllverbrennungsanlage**

(30) Priorität: 09.02.1994 DE 4404038; 04.10.1994 DE 9415928 U
(71) Anmelder: Entsorgung Dortmund GmbH, D-44139 Dortmund (DE)
(72) Erfinder: Hoppe, Christian, D-40882 Ratingen (DE); Stadie, Klaus, D-44879 Bochum (DE)
(74) Vertreter: Vomberg, Friedhelm, Dipl.-Phys.

(57) **Zusammenfassung**

Die Erfindung betrifft ein Verfahren und eine Vorrichtung zur Konditionierung von Abfällen vor einer Müllverbrennungsanlage, bei der einzelne Müllsorten mit unterschiedlichen Heizwerten gemeinsam dieser Müllverbrennung zugeführt werden.

Insbesondere um die Heizwerte optimieren zu können, wird vorgeschlagen, jeweils in getrennten Behältern, nur jeweils eine Abfallgruppe enthaltenen Müll auf oder in ein Fördermittel im vorbestimmten Verhältnis der Volumina der verschiedenen Behälter zu geben und von diesem Fördermittel der Verbrennung zuzuführen.

## Beschreibung

Die Erfindung betrifft ein Verfahren und eine Vorrichtung zur Konditionierung von Abfällen vor einer Müllverbrennungsanlage, bei der einzelne Müllsorten mit unterschiedlichen Heizwerten gemeinsam dieser Müllverbrennungsanlage zugeführt werden.

Nach dem Stand der Technik werden sukzessive unterschiedliche Müllsorten, im einzelnen Haus-, Gewerbe-, Sperrmüll oder sonstige Abfälle, in einen großvolumigen Bunker einer Müllverbrennungsanlage gekippt oder sonstwie gefördert, von wo aus sie von Baggern oder sonstigen Greifern aufgenommen und in den zu einer Verbrennungsanlage führenden Trichter gegeben werden. Die Bunker der Müllverbrennungsanlagen haben baubedingt nur eine endliche Zahl von Abkippstellen, so daß ankommende Müllfahrzeuge sowie Fahrzeuge gewerblicher oder privater Entsorger häufig Wartezeiten bis zum Abkippen in den Bunker in Kauf nehmen müssen. Soweit der gesammelte Müll in Containern angefahren werden kann, werden häufig die Container zwischengelagert, um sie in Zeiten geringer Auslastung mit Fahrzeugen zum Bunker zwecks Entladung zu fördern. Je nach im Bunker befindlichen Müllzusammensetzungen bzw. den Zusammensetzungen, die in die Müllverbrennungsanlage quasi kontinuierlich aufgegeben werden, schwankt der Heizwert erheblich, weshalb Brennstoffzusätze aufgegeben, Verbrennungstemperaturen und sonstige Verbrennungsparameter jeweils eingestellt werden müssen, um eine optimale Verbrennung zu gewährleisten.

Aufwendig sind auch Brandschutzvorsorgemaßnahmen, die in solchen Bunkern zu treffen sind. Da die Bunker nach außen hin offen sind, kann der dort abgekippte Müll zu Staub- und Geruchsbelästigungen in der Umgebung führen. Soweit überhaupt eine Kontrolle der einzelnen abgekippten Müllchargen möglich ist, läßt sich jeweils nicht verhindern, daß auch Chargen, die dem Sonderabfall zugehörig sind in den Bunker gekippt werden. Das betreffende Fahrzeug, das den verseuchten Müll abgekippt hat bzw. die spezielle Containerladung kann man in den meisten Fällen nicht feststellen.

Es ist Aufgabe der vorliegenden Erfindung, ein Verfahren und eine Vorrichtung der eingangs genannten Art zu entwickeln, womit es möglich ist, eine gezielte optimierte Heizwerteinstellung des aufgegebenen Verbrennungsgutes zu schaffen.

Diese Aufgabe wird durch das Verfahren nach Anspruch 1 gelöst.

Hiernach wird der nach jeweils vorbestimmten Abfallgruppen getrennte Müll in getrennten, nur jeweils eine Abfallgruppe enthaltenen Behältern auf oder in ein Fördermittel im vorbestimmten Verhältnis der Behältervolumina gegeben und von diesem Fördermittel zur Verbrennung geführt. Dieses Verfahren besitzt den Vorteil, daß auf die bisher notwendigen Bunker verzichtet wird. Der Müll wird in Behältern, vorzugsweise Containern, sortiert gelagert, so daß pro Abfallgruppe ein nur wenig schwankender Heizwert gegeben ist. Entsprechend diesen Heizwerten werden Abfall-Gemische zusammengestellt, deren Heizwert steuerbar ist. Die Behälter- insbesondere Container-Zwischenlagerung benötigt zwar ebenfalls Platz, schafft jedoch den erheblichen Vorteil, daß diese kontrolliert nach Inhalten (Abfallgruppen) eingelagert werden können sowie im Bahnverkehr verkehrsentzerrt, d.h. außerhalb der Anlieferungsspitzen, entladen werden können. Das Auffinden von Störstoffen und deren Separierung wird möglich bzw. erheblich erleichtert. Insbesondere bei einer verseuchten Müllcharge, die einer Sonderbehandlung unterzogen werden muß, braucht nur der betroffene Containerinhalt entsprechend behandelt zu werden. Bei dem Aufgeben der unterschiedlichen Behälterinhalte auf das Fördermittel kann noch eine gezielte Chargenprüfung stattfinden, die eine Rückholung der betreffenden Charge vor der Verbrennung vereinfacht. Weiterhin wird die Brandgefahr im Falle einer Lagerung in geschlossenen Containern gegenüber der Bunkerlagerung ausgeräumt. Für den Fall einer Revision in der Müllverbrennungsanlage können ohne größeren Aufwand die Behälter anderen Verbrennungsanlagen zugeführt werden, ein ansonsten notwendiger Aushub des Bunkers, insbesondere in Verbindung mit einem Altlastenverdacht im Untergrund und den hiermit verbundenen Entsorgungsproblemen entfällt völlig. Die Geruchs- und Staubbelästigung wird erheblich minimiert.

Weiterbildungen des erfindungsgemäßen Verfahrens sind in den Ansprüchen 2 bis 4 beschrieben.

So werden bevorzugt die Abfallgruppen, wie z.B. Hausmüll, Gewerbeabfall, Sperrmüll, zusammengestellt. Jede dieser Gruppen hat einen nur wenig schwankenden Heizwert, so daß über eine entsprechende Zusammenstellung eine Heizwertoptimierung durchführbar ist. Dies bedeutet für das Zwischenlager, daß dort eine begrenzte Anzahl Behältersorten unterschieden werden müssen, d.h., die zur Behälterverwaltung notwendige Logistik wird erheblich vereinfacht. Die betreffenden Abfälle lassen sich insbesondere in einem Hochregallager verwalten.

Nach einer Weiterbildung der Erfindung werden sperrige Güter vor der Lagerung bzw. vor der Verbrennung zerkleinert. Die Zerkleinerung von sperrigen Gütern, die auch bei konventioneller Bunkerlagerung entweder bei Anlieferung sofort oder unmittelbar vor der Verbrennung erfolgen muß, schafft im vorliegenden Fall den besonderen Vorteil, daß die Zwischenlagerung platzsparend erfolgen kann.

Vorzugsweise werden die Abfallgruppen entsprechend ihren Heizwerten zusammengestellt, was insbesondere dann möglich ist, wenn nach einer weiteren Ausgestaltung der Erfindung die Abfallgruppen vorgepreßt werden, was insbesondere in Preßcontainern geschehen kann, in denen sie auch dem Fördermittel zugeführt werden.

Wie bereits erwähnt, werden die Abfälle vorzugsweise gruppenweise sortiert und vorgepreßt in Container abgefüllt und in einem Hochregallager bis zur Verbrennung bzw. Zuführung zur Verbrennung zwischengelagert. Der Transport der aus dem Hochregallager entnommenen Container wird bevorzugt mittels einer Kranbahn zu einer zentralen Entleerung durch Kippen oder Auspressen durchgeführt, wodurch lästiges zeitraubendes Umladen auf Lastkraftwagen vermieden werden kann.

Nach einer weiteren Ausbildung der Erfindung wird jeder Container einem entsprechend seiner Abfallgruppe, die er enthält, zugeordneten Entleerungsplatz zugeführt, wobei die Zahl der Entleerungsplätze gleich groß der Zahl der Abfallgruppen ist. Jeder Container wird in eine dem Entleerungsplatz jeweils angeschlossene und mit dem Förderorgan (Schubboden oder Plattenband) versehene Vorlage entleert und von hier aus unter Mischen mit den übrigen, in den anderen Vorlagen entleerten Abfällen der Verbrennung zugeführt. Die in die Vorlage entleerte Müllfraktion kann über das Förderorgan beobachtet und mit einstellbarem Massenstrom pro Zeiteinheit den übrigen Müllfraktionen beigemengt werden.

Bevorzugt geschieht das Mischen der Abfälle unterschiedlicher Abfallgruppen durch Aufgabe der Abfälle in einen Transportkanal und durch Hin- und Herbewegung eines in diesem Transportkanal geführten Schiebers oder Schubschildes. Diese Mischverfahren kann störunanfällig durchgeführt werden, da sich die Schieber oder Schubschilde robust bauen lassen.

Nach einer weiteren Ausbildung der Erfindung führt der Schieber oder das Schubschild den gemischten Abfall über einen weiteren Kanal einem Trichter eines Verbrennungsofens zu. In diesem weiteren Kanal wird vorzugsweise ebenfalls ein Schieber oder ein Schubschild hin und her bewegt.

Nach einer weiteren Ausführungsform der Erfindung sind die Geschwindigkeiten des Schubbodens und und/oder des oder der Schieber oder Schubschilde regelbar, um die Taktzeiten bzw. Massenströme pro Zeiteinheit aufeinander abstimmen zu können.

Nach einer Weiterbildung der Erfindung führen die Schieber oder Schubschilde sowohl beim Hinals auch beim Herbewegen in dem Transportkanal jeweils am Ende des Transportkanales angeordneten unterschiedlichen Kanälen Abfälle zu, womit über die unterschiedlichen Kanäle zwei Verbrennungstrichter oder zwei Verbrennungsöfen parallel bestückt werden können. Die Förderung sowohl beim Hin- als auch beim Herbewegen des Schiebers oder Schubschildes spart Maßnahmen ein, die zur Unterbrechung des Förderstromes in den Transportkanal bzw. weiteren Kanal ansonsten erforderlich wären. Die Müllaufgabe wird somit kontinuierlich gestaltet.

Nach Aufgabenstellung vor der Verbrennungsanlage wird nach dem Mischen eine Zerkleinerung der unterschiedlichen Abfallgruppen durchgeführt, wodurch die Anzahl der Zerkleinerungsvorrichtungen minimiert werden kann.

Die erfindungsgemäße Vorrichtung zur Abfallkonditionierung ist im Anspruch 5 beschrieben. Sie besitzt mindestens zwei Entleerungsplätze für Container und höhenmäßig abgesetzt darunterliegende, mit Förderorganen versehene Vorlagen, die in einen Transportkanal als Zufuhr zur Müllverbrennungsanlage münden. Mindestens zwei Entleerungsplätze werden benötigt, um gleichzeitig unterschiedliche Abfallsorten in einen Transportkanal geben zu können. Vorzugsweise werden nebeneinander fünf Entleerungsplätze verwendet, so daß bei vier Abfallgruppen ein überzähliger Entleerungsplatz bereitsteht, so daß etwaige Reparaturarbeiten an einem Entleerungsplatz den Betrieb der Anlage nicht behindern können.

Nach einer weiteren Ausgestaltung der Erfindung ist jeder Entleerungsplatz mit einer Kipp-und/oder Preßvorrichtung versehen, so daß das Containergut ohne weitere Hilfsmittel entleert werden kann. Bei Verwendung einer Kippvorrichtung ist diese bevorzugt mit einer automatisierten Containerdeckelöffnungsvorrichtung verbunden.

Der Containerinhalt kann in Vorlagen abgekippt werden, die bevorzugt jeweils eine Aufnahmekapazität von bis zu 50 m³, vorzugsweise 40 m³, besitzen. Hierbei ist der gesamte Boden der Vorlage in Länge und Breite mit einem Förderorgan, wie einem Schubboden, belegt.

Quer zu den Entleerungsstellen bzw. den Transportbewegungsrichtungen erstreckt sich nach einer weiteren Ausgestaltung der Erfindung der Transportkanal, der als an mindestens einem Ende offene Rinne ausgebildet ist, in der ein Schieber oder ein Schubschild hin und her bewegbar ist. Vorzugsweise sind beide Enden der Rinne offen, wobei sich in diesem Falle jeweils ein weiterer Kanal anschließt, der zu einem Aufgabetrichter der Müllverbrennungsanlage führt. Soweit die Förderung in diesem weiteren Kanal nicht durch Einstellen eines Neigungswinkels bereits gewährleistet werden soll, empfiehlt es sich, auch den weiteren Kanal bzw. die weiteren Kanäle ebenfalls mit einem hin und her bewegbaren Schieber oder einem Schubschild auszustatten.

Nach einer weiteren Ausgestaltung der Erfindung besitzen das Förderorgan, die Schieber und/oder Schubschilde eine regelbare Geschwindigkeit oder Taktfrequenz bei synchronisierter Bewegung. Hiermit ist es möglich, veränderten Heizwerten einer Abfallgruppe dadurch Rechnung zu tragen, daß ein entsprechend geändertes Mischungsverhältnis eingestellt wird. Zwischen den Förderorganen und der Müllverbrennungsanlage, vorzugsweise hinter dem Transportkanal ist eine Zerkleinerungsvorrichtung angeordnet.

Das An- und Abfahren eines Containers auf einen Entleerungsplatz erfordert Zeit, während dessen das Förderorgan nicht beschickt werden kann. Will man diesem Umstand nicht durch eine entsprechend größere Schubbodenfläche bzw. Aufnahmekapazität Rechnung tragen, können vorzugsweise pro Schubboden zwei, jeweils beidseitig angeordnete Entleerungsplätze vorgesehen sein, worüber alternierend Container entleert werden können.

Eine optimale Abfallkonditionierung ohne Wartezeiten für die Zulieferer läßt sich verwirklichen, wenn den Entleerungsplätzen jeweils eine, vorzugsweise eine gemeinsame, Transportvorrichtung von einem Hochregallager für Container vorgeschaltet ist. Die Container werden dann bedarfsentsprechend aus dem Hochregallager entnommen und zur Mischung der Müllfraktionen bereitgestellt. Bei einem Hochregallager mit mehreren Etagen bietet sich als Transportvorrichtung ein Regalbediengerät wie ein Kran an.

Eine weitere Optimierung der Verbrennung kann im Hinblick auf eine kontinuierliche Betriebsführung dadurch geschaffen werden, daß von den Entleerungsplätzen mehrere zu verschiedenen Müllverbrennungsanlagen oder verschiedenen Aufgabetrichtern führende Transportkanäle vorgesehen sind. Auf diese Art können Revisionen oder Reparaturarbeiten einer Müllverbrennungsstraßen ohne wesentliche Beeinträchtigung durchgeführt werden.

Nach dem Stand der Technik sind sogenannte Kratzerförderer bekannt, die als Strebfördermittel im Steinkohlenbergbau eingesetzt werden. Hierbei schieben in waagerechter oder geringfügig geneigter feststehender Holz- oder Stahlblechrinne Kratzerbleche oder -stege, die an einer Ein- oder Doppelstrangkette befestigt sind, kleine Schüttguthaufen schrappend vor sich her. Die Kratzer werden durch mitlaufende Rollen gestützt, wobei das Leertrum ober- oder unterhalb des Fördertroges rückgeführt wird. Der Leistungsbedarf dieser Kratzerbleche ist ebenso groß wie der Verschleiß.

Im Trogkettenförderer wird eine Einstrang-oder Zweistrangkette mit eng aufeinanderfolgenden Mitnehmern in einem geschlossenen Trog mit mäßiger Geschwindigkeit vorwärtsbewegt. An der Aufgabestelle fällt das Fördergut auf das fördernde Kettentrum und wird zunächst durch die Querstege und dann durch die bereits in Bewegung befindliche Gutschicht mitgenommen. Für diese Trogkettenförderer sind besondere, zum Teil aufwendige Ausgestaltungen erforderlich.

Darüber hinaus sind Schüttelrutschen bekannt, bei denen das in der ungleichförmig hin- und hergehenden Rinne liegende Fördergut stetig beschleunigt und bis zur Durchbrechung des Reibungsschlusses der ruhenden Reibung mitgenommen wird. Von da ab gleitet das Schüttgut infolge seiner kinetischen Energie bis zum Aufzehren der kinetischen Energie.

Die hiermit vergleichbaren Schwingrinnen, die Trog- oder Rohrform haben, werden durch schnelle Schwingungen mit kleiner Amplitude vor aufwärts und zurück abwärts bewegt. Hin- und Rückbewegung der schräggerichteten, im Idealfall sinusförmigen Schwingbewegung führen zu einer fließenden Bewegung des Schüttgutes.

Um eine Schubvorrichtung der eingangs genannten Art zu schaffen, die einfach aufgebaut und robust ist und störunanfällig arbeitet, insbesondere auch für gemischte Schüttgüter, wie Abfälle beliebiger Mischung, geeignet ist, wird vorgeschlagen, daß ein sich im wesentlichen zumindest im Bereich oberhalb des Kanalbodens über den Kanalquerschnitt erstreckender motorangetriebener Schubschild auf jeweils an der Rinnenseitenwand angeordneten Schienen entlang der Rinnenlängsachse hin- und herverfahrbar abgestützt ist. Dieser Schieber hat gegenüber den eingangs erwähnten Kratzförderern den Vorteil, daß erhebliche Reibungsenergie dadurch gespart werden kann, daß das Schüttgut im Rinnenbereich geschoben und nicht kratzend vorwärts bewegt wird. Die Hin- und Herfahrbarkeit der Schubvorrichtung ermöglicht weiterhin eine Förderung des Schüttgutes in diametral entgegengesetzte Richtungen, so daß beidseitig der als Förderrinne dienenden Kanalrinne Übergabestellen eingerichtet werden können. In diesem Falle kann sowohl bei der Hin- als auch bei der Herbewegung des Schubschildes eine Förderarbeit verrichtet werden.

Bevorzugte Weiterentwicklungen dieser erfindungsgemäßen Schubvorrichtung sind in den Ansprüchen 8 bis 10 beschrieben.

So weist der Schubschild ein Trägergehäuse mit jeweiligen an der Vorder- und der Rückseite zum Schüttguttransport angeordneten Blechplatten auf. Das Trägergehäuse kann erheblich stabiler gebaut werden als ein nur plattenförmiger Schieber, der über eine Schub- bzw. Druckstange betrieben wird. Die Blechplatten sind hinsichtlich ihrer Stärke und des Materiales in bezug auf das Fördergut verschleißfest ausgestaltet.

Nach einer weiteren Ausgestaltung der Erfindung ist in dem Trägergehäuse ein Antriebsmotor, vorzugsweise eine Käfigläufermotor, angeordnet, der über ein Getriebe auf translatorische Antriebsmittel wirkt. Der Antriebsmotor wird durch die Blechplatten gegenüber dem Schüttgut geschützt. Das translatorische Antriebsmittel besteht vorzugsweise aus einer in eine Zahnstange eingreifenden Zahnradwelle. Die Zahnstange, insbesondere jeweils eine Zahnstange, sind an der Rinnenseitenwand befestigt, so daß ein jeweils formschlüssiger Zahnrad-Zahnstangeneingriff eine sicher führbare translatorische Bewegung gewährleistet. Zur Führung des Schubschildes sind jeweils zwei über zwei auf jeder Seite endseitig eines Trägers angeordnete Laufräder, vorzugsweise Laufräder mit Spurkränzen, auf den Schienen verfahrbar. Eine weitere verbesserte Führung ist gegeben, wenn die Laufräder oben und unten in jeweiligen Schienen geführt werden. Zur konstruktiven Vereinfachung sind die Zahnstange(n) unter die ggf. jeweils untere Schiene an einer seitlichen Abstützung des Schubkanales befestigt. Zahnstange und untere Schiene können somit als einstückiges Teil gebaut werden. Um in einem Störungsfall ein sofortiges Stoppen des Schubschildes erreichen zu können, ist der Antriebsmotor mit einer Bremse versehen. Eine Anlaufkupplung sorgt nach einer weiteren Ausgestaltung der Erfindung dafür, daß ein lastfreies Anlaufen des Elektromotors und damit ein leichter Anlauf des Schubschildes ermöglicht wird.

Das Getriebe ist nach einer weiteren Ausgestaltung der Erfindung als ein dreistufiges Kegel-Stirnrad-Aufsteckgetriebe in Hohlwellenausführung ausgebildet, so daß die Drehzahl und das Drehmoment entsprechend angepaßt werden können.

Schließlich ist nach einem Ausführungsbeispiel der Erfindung das Getriebe mit einer durchgehenden Antriebswelle verbunden, bestehend aus einer Getriebewelle mit den genannten zwei Zahnradwellen, die vorzugsweise durch Schalenkupplungen verbunden sind.

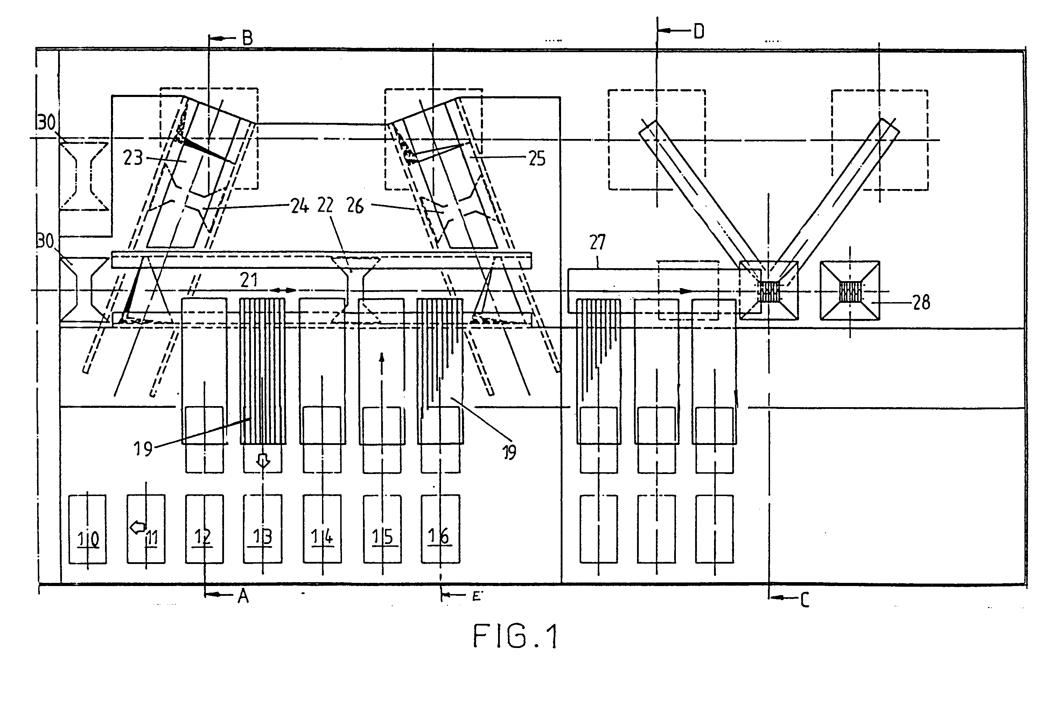

Ein Ausführungsbeispiel der Erfindung ist in den Zeichnungen dargestellt. Es zeigen
Fig. 1 eine schematische Darstellung der erfindungsgemäßen Vorrichtung,

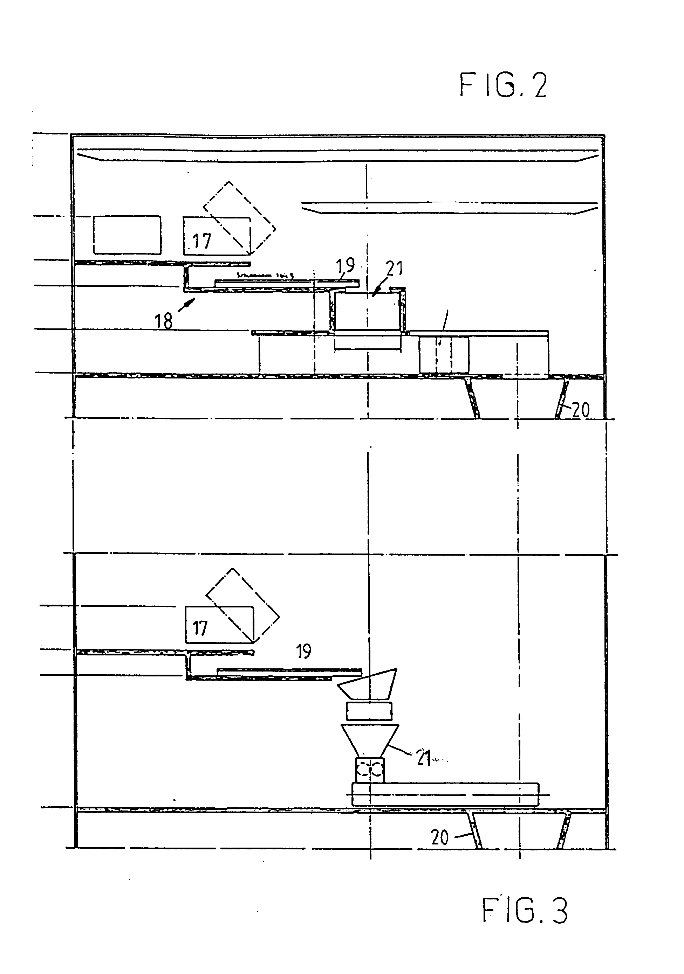

Fig. 2 und 3 jeweils Schnitte entlang der Linien A - B bzw. C - D nach Fig. 1,

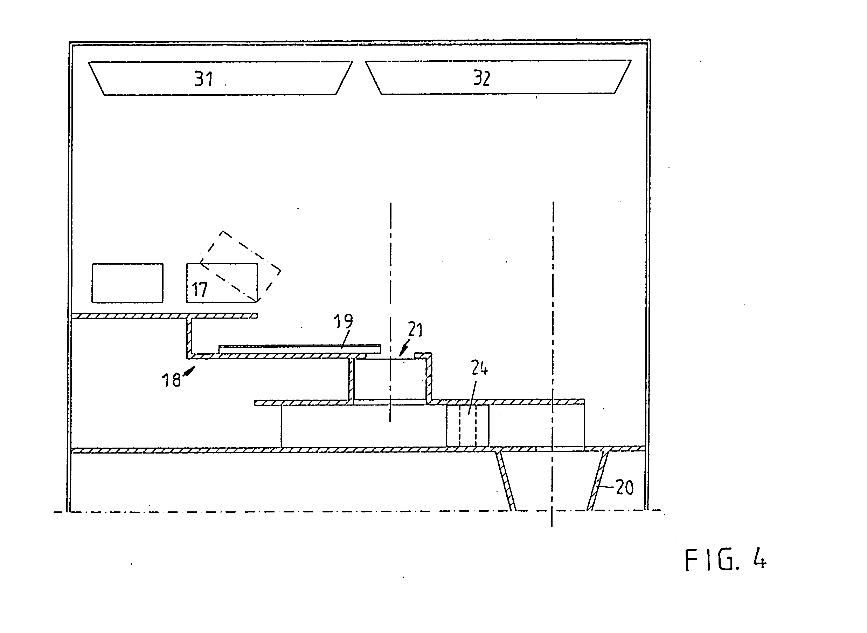

Fig. 4 einen Schnitt entlang einer Linie E - B der Vorrichtung nach Fig. 1,
Fig. 5 eine Vorderansicht der erfindungsgemäßen Schubvorrichtung,
Fig. 6 eine Seitenansicht der erfindungsgemäßen Vorrichtung als Schnitt A - A nach Fig. 5 und
Fig. 7 eine Draufsicht der erfindungsgemäßen Schubvorrichtung.

Grundsätzlich kann zwischen zwei Anlieferungsformen unterschieden werden, nämlich der Anlieferung in herkömmlichen Müllfahrzeugen, offenen Mulden- und Pritschenfahrzeugen etc.oder der Anlieferung in geschlossenen Containern, in denen der eingesammelte Müll bereits verpreßt worden ist. Soweit der angelieferte Müll nicht vorgepreßt ist, werden die herkömmlichen Müllanlieferungen komplett über eine Preßvorrichtung in Container umgeladen, wobei sperrige Güter, d.h. insbesondere Sperrmüll oder Gewerbeabfälle, vorher eine Zerkleinerungsanlage durchlaufen. Auf diese Art und Weise ist jeglicher Abfall sortiert in einem Hochregallager unterzubringen.

Damit ein hohen Anlieferungsaufkommen von Restmüllfahrzeugen an der Umladung abgewickelt werden kann, werden mehrere Anfahrstellen bzw. Abkippstellen eingerichtet. Die in Förderrinnen mit einer Schubbodeneinheit oder auf Transportbändern (Plattenbändern) abgekippten Restmüllmengen werden über Zuförderorgane einer Zerkleinerung bzw. einer Presse direkt zugeführt. An die Presse ist jeweils ein Container ankoppelbar, der nach Befüllung über eine Transportvorrichtung automatisch in das Containerlager umgesetzt wird.

Anlieferungen von Stoffen, wie z.B. Hausmüll, die direkt in geschlossenen Preßcontainern gesammelt wurden, werden an einer zentralen Annahme direkt in das Containerlager übernommen. Die Container können sowohl über die Straße mittels Lkw oder per Bahn an einer zentralen Umschlagstelle direkt dem Hochregallager zugeführt werden.

Das Containerlager wird als Hochregallager dargestellt. Aus wirtschaftlichen Überlegungen heraus sind sieben Container in Kassetten (Regalen) übereinander eingelagert. Entsprechend dem Bedarf, der vom Durchsatz und Puffervolumen der Müllverbrennungsanlage abhängt, ist die Zahl der nebeneinanderliegenden Regalfächer gewählt. Ggf. werden mehrere Regalreihen hintereinander angeordnet. Zwischen den Regalen arbeiten automatische Regalbediengeräte, die nach einem EDV-gestützten Logistikprogramm Container aus dem Regal entnehmen und diese an einer zentralen Stelle abstellen. Von dort aus werden die Container mit einer Kranbahn übernommen und zu einem Entleerungsplatz transportiert, wo sie durch Kippen oder Auspressen entleert werden. Auch dieser Arbeitsgang läßt sich im Rahmen eines Logistikprogrammes automatisieren.

Die Entleerungsplätze 10 bis 16 befinden sich oberhalb eines Eingabetrichters 20 für die Verbrennungsanlage, die bei herkömmlichen Rostfeuerungsanlagen etwa in einer Höhe von 25 m angeordnet sind. Für die Entleerung der mit Müll gefüllten Container 17 sind mehrere Entleerungsplätze 10 bis 16 nebeneinander vorgesehen, von denen jeder mit einer Kippvorrichtung oder alternativ hierzu mit einer Auspreßvorrichtung versehen ist. Das Öffnen der Containerdeckel wird automatisch während des Kipp- oder Auspreßvorganges vorgenommen. Der Containerinhalt wird komplett in eine Vorlage 18 abgekippt, die etwa 40 m³ Müllvolumen aufnehmen kann. Der gesamte Boden der Vorlage ist als Schubboden 19 ausgestattet bzw. mit einem solche belegt. Mittels dieses Schubbodens 19 wird die aufgegebene Müllfraktion in Richtung der Transportrinne 21 entsprechend der Schubbodengeschwindigkeit dosiert bewegt. Die Transportkanalrinne 21, die quer zu den jeweiligen Schubböden 19 verläuft, liegt unterhalb der Schubböden und nimmt die entsprechend der Schubbodengeschwindigkeit dosierten Müllmengen auf. In einem vorgegebenen Zeittakt, der variabel einstellbar ist, fährt ein Schubschild 22 durch diesen Kanal und nimmt den aus allen Kippbereichen, d.h. aus allen Containern, über die Schubböden 19 dosierten Müll mit und transportiert ihn in einen weiteren Kanal 23, der wiederum mit einem Schubschild 24 ausgestattet ist. Dieser Kanal 23 transportiert die Müllmischung zu den Aufgabetrichtern 20 der Verbrennungsöfen. Beim Zurückfahren des Schubschildes 22 der Transportrinne 21 wird der zwischenzeitlich in der Transportrinne 21 angefallene Müll zu entgegengesetzten Seite mitgenommen und über einen zweiten Kanal 25 zu einem weiteren Trichter der Verbrennungsstraße transportiert. Zusätzlich können noch weitere Schubvorrichtungen 30 bereitstehen, die im Falle eines Austausches die genannten Schubvorrichtungen 22, 24 oder 26 ersetzen können.

Über eine zusätzliche Förderrinne 27 können weitere Trichter von Verbrennungsstraßen beschickt werden. Je nach Verbrennungstechnologie kann zwischen dem Transportkanal und der Übergabestelle der weiteren Kanäle ein bzw. können mehrere Zerkleinerungsvorrichtungen 28 vorgesehen sein.

Bevorzugt sind wegen einer besseren Verfügbarkeit die komplette Umladung, Containerlagerung und die Containerübernahme zur Homogenisierung der Containerinhalte die Anlagenteile weitestgehend doppelt ausgelegt. Durch die robuste Bauweise der einzelnen Anlagenteile ist eine störungsfreie Betriebssicherheit sowie eine hohe Wartungs- und Reparaturfreundlichkeit gegeben.

Die im Bereich der Müllentleerung eingesetzten Förderorgane, insbesondere die sogenannten Schubschilde 24, 26 in den Förderrinnen 23, 25, 27, können schnell aus dem Kanal herausgefahren und durch ständig bereitstehende Schubschilde 30 mit eigenem Antrieb ersetzt werden. Um weiterhin Engpässe im Bereich der Versorgung der Verbrennungstrichter zu vermeiden, kann der im Transportkanal 21 durch die Schubböden abgeworfene Müll auch alternativ direkt mit einem Schalengreifer eines überbauten Kranes entnommen und zu den Verbrennungstrichtern aufgegeben werden.

Dem erfindungsgemäßen Verfahren und der erfindungsgemäßen Vorrichtung liegen die Überlegungen zugrunde, den in einer herkömmlichen Müllverbrennungsanlage in Bunkern lagernden Müll in Container abgefüllt anzunehmen oder zu verpressen und die Container als Lagerbehälter, d.h. als Puffer für die Müllverbrennungsanlage, zu nutzen. Bevorzugt werden einzelne Abfallfraktionen mit definierten Heizwerten in den Containern dargestellt. Insbesondere bieten sich die Abfallgruppen Hausmüll, Gewerbeabfall, Sperrmüll/Baustellenabfall und Industrieabfall an. Vor Ort in Container verladene Abfälle werden von zentralen Plätzen aus mit Hängerzügen per Lkw oder auf der Schiene in größeren Transporteinheiten direkt zur Zwischenlagerstelle transportiert, so daß die angelieferten Containereinheiten in das Hochregallager eingestellt werden können.

Bereitstehen können auch Krane 31 und 32, die mit einem Schalengreifer oder sonstigen Lasthebemitteln versehen sind, um alternativ zu den Schubvorrichtungen Müll aus den Transportkanälen zu übernehmen oder Transporte der Schubvorrichtungen beim Austausch zu besorgen.

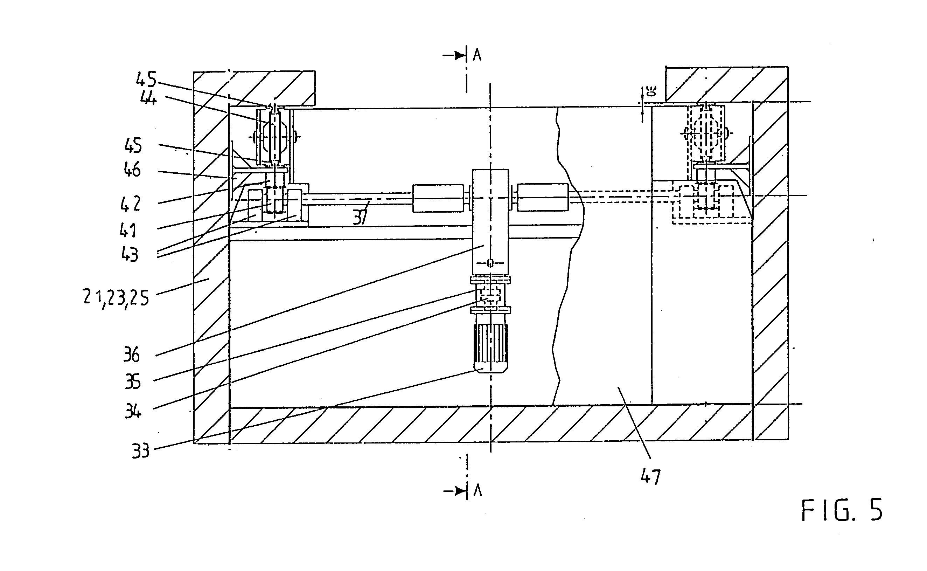

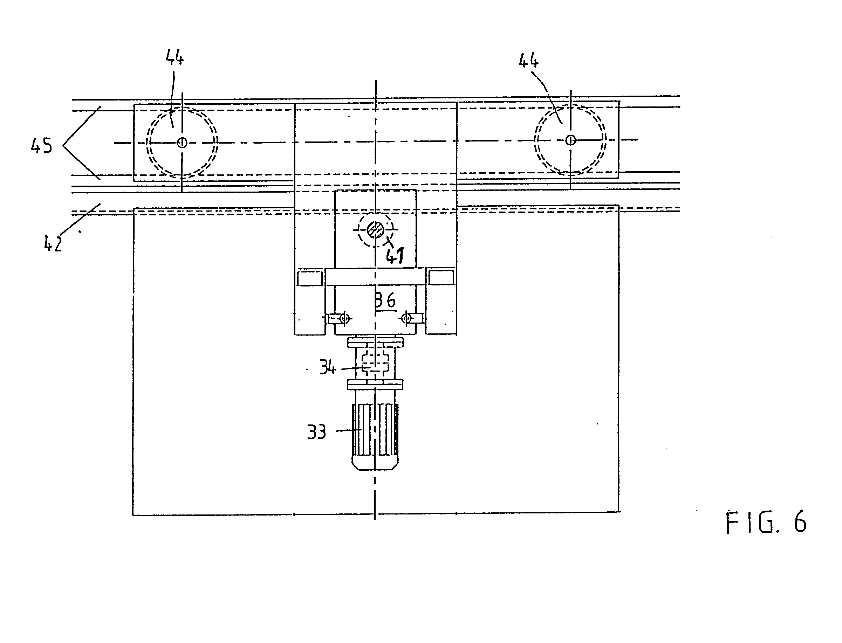

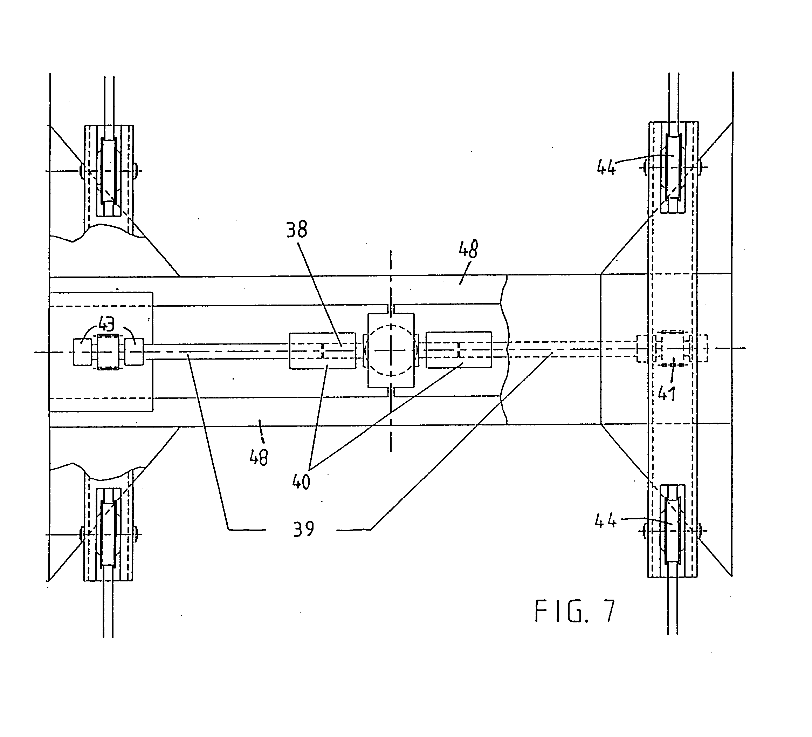

Die Schubvorrichtungen sind entsprechend den Fig. 5 bis 7 folgendermaßen aufgebaut:
Jede Schubvorrichtung besitzt einen Drehstrommotor 33, der als Käfigläufermotor mit einer Bremse in Flaschausführung ausgebildet ist. Beispielsweise kann ein Drehstrommotor mit einer Leistung von 7,5 kW und einer Drehzahl von 960 min-¹ verwendet werden. An den Drehstrommotor ist eine Anlaufkupplung 34 angeflanscht, die über eine Kupplungslaterne 35 mit einem Kegel-Stirnrad-Getriebe 36 verbunden ist. Die Anlaufkupplung dient als Sicherheitskupplung und ermöglicht ein lastfreies Anlaufen des Elektromotors und damit einen leichten Anlauf der Schubvorrichtung. Das dreistufige Kegel-Stirnrad-Aufsteckgetriebe 36 in Hohlwellenausführung dient zur Anpassung der Drehzahl und des Drehmomentes mit Leistungen von beispielsweise 16,8 kW und Drehzahlen von 16 min-^{1.} Zur Übertragung des erzeugten Drehmomentes dient auf beiden Antriebsseiten eine durchgehende Antriebswelle 37, die aus einer Getriebewelle 38 und zwei Zahnradwellen 39 besteht, die durch Schalenkupplungen 40 nach DIN 115, Bl. 1, verbunden sind. Die auf die Zahnradwelle 39 übertragene Drehbewegung wird auf jeder der beiden Antriebsseiten von einem Zahnrad 41 auf eine Zahnstange 42 in eine Translationsbewegung umgewandelt. Zur Lagerung der Antriebswelle 37 und der Zahnräder 41 werden vier Stehlager 43 nach DIN 737 eingesetzt.

Die Schubvorrichtung wird mittels vier Laufrädern jeweils mit Spurkränzen gewährleistet, die auf oberen und unteren Kranschienen 45 geführt werden. Die Zahnstange 42 und die untere Kranschiene 45 sind über eine Seitenwandabstützung 46 mit dem Transport- und Schubkanal 21, 23 oder 25 bzw. dessen Seitenwand verbunden. Jede Schubvorrichtung besitzt ein Trägergehäuse 47, das jeweils an der Vorder- und der Rückseite zum Schüttguttransport angeordnete Blechplatten 48 aufweist. Das Trägergehäuse kann aus einem Tragwerk und genormten Profilen bestehen, zu deren vorderer und hinterer Verkleidung die Blechplatten 48 dienen. Diese Blechplatten wirken einerseits als Schieberplatten 48 zur Beförderung des in dem Kanal 21, 23 oder 25 liegenden Schüttgutes und zum anderen zum Schutz der in dem Gehäuse befindlichen Antriebs- und Getriebeelemente.

## Patentansprüche

1. Verfahren zur Konditionierung von Abfällen vor einer Müllverbrennungsanlage, bei der einzelne Müllsorten mit unterschiedlichen Heizwerten gemeinsam dieser Müllverbrennungsanlage zugeführt werden,
dadurch gekennzeichnet,
daß der nach jeweils vorbestimmten Abfallgruppen getrennte Müll in getrennten, nur jeweils eine Abfallgruppe enthaltenen Behältern auf oder in ein Fördermittel (18 bis 27) im vorbestimmten Verhältnis der Behältervolumina gegeben und von diesem zur Verbrennung geführt wird.

2. Verfahren nach Anspruch 1, dadurch gekennzeichnet, daß die Abfallarten entsprechend ihren Heizwerten zu Abfallgruppen, vorzugsweise zu Abfallgruppen gleichen oder ähnlichen Heizwertes, zusammengestellt werden.

3. Verfahren nach Anspruch 1 oder 2, dadurch gekennzeichnet, daß die Abfälle gruppenweise sortiert und vorgepreßt in Container (17) abgefüllt und in einem Hochregallager bis zur Verbrennung bzw. Zuführung zur Verbrennung zwischengelagert werden, wobei vorzugsweise die aus dem Hochregallager entnommenen Container (17) mittels einer Kranbahn zu einer zentralen Entleerung durch Kippen oder Auspressen transportiert werden.

4. Verfahren nach einem der Ansprüche 1 bis 3, dadurch gekennzeichnet, daß jeder Container (17) einem entsprechend seiner Abfallgruppe, die er enthält, zugeordneten Entleerungsplatz (10 bis 16) zugeführt wird, wobei die Zahl der Entleerungsplätze mindestens gleich groß der Zahl der Abfallgruppen ist, und daß jeder Container (17) in eine dem Entleerungsplatz jeweils angeschlossene mit einem Förderorgan (19), vorzugsweise Schubboden oder Plattenband, versehene Vorlage (18) entleert und von hier aus unter Mischen mit den übrigen, in den anderen Vorlagen entleerten Abfällen der Verbrennung zugeführt wird.

5. Vorrichtung zur Abfallkonditionierung einer Müllverbrennungsanlage, gekennzeichnet durch mindenstens einen Entleerungsplatz (10 bis 16) für Container (17) und höhenmäßig abgesetzt darunterliegende, mit Schubböden (19) versehene Vorlagen (18), die in einen Transportkanal (21) als Zufuhr zur Müllverbrennungsanlage münden, wobei vorzugsweise jeder Entleerungsplatz (10 bis 16) mit einer Kipp- und/oder Preßvorrichtung versehen ist.

6. Vorrichtung nach Anspruch 5, dadurch gekennzeichnet, daß der Transportkanal (21) als an mindestens einem Ende offene Rinne ausgebildet ist, in der ein Schieber oder ein Schubschild (22) hin und her bewegbar ist, wobei sich vorzugsweise an das oder die offenen Enden der Rinne (22), ggf. jeweils, ein weiterer, vorzugsweise ebenfalls mit einem hin und her bewegbaren Schieber oder einem Schubschild (24, 26) ausgestatteter Kanal (23, 25) anschließt, der zu einem Aufgabetrichter (20) der Müllverbrennungsanlage führt.

7. Vorrichtung nach einem der Ansprüche 5 oder 6, dadurch gekennzeichnet, daß der Schubboden (18), die Schieber und/oder Schubschilde (24, 26) bewegungssynchronisiert sind, vorzugsweise eine regelbare Geschwindigkeit oder Taktfrequenz besitzen.

8. Vorrichtung nach einem der Ansprüche 5 bis 7, dadurch gekennzeichnet, daß ein sich im wesentlichen zumindest im Bereich oberhalb des Kanalbodens über den Kanalquerschnitt erstreckender motorangetriebener Schubschild (47) auf jeweils an der Rinnenseitenwand angeordneten Schienen (45) entlang der Rinnenlängsachse hin- und herverfahrbar abgestützt ist, wobei der Schubschild vorzugsweise ein Trägergehäuse (47) mit jeweiligen an der Vorder- und der Rückseite zum Schüttguttransport angeordneten Blechplatten (48) aufweist.

9. Vorrichtung nach Anspruch 8, dadurch gekennzeichnet, daß in dem Trägergehäuse (47) ein Antriebsmotor (33), vorzugsweise ein Käfigläufermotor, angeordnet ist, der über ein Getriebe (36) auf translatorische Antriebsmittel (41, 42) wirkt, das vorzugsweise aus einer in eine Zahnstange (42) eingreifenden Zahnradwelle (41) besteht.

10. Vorrichtung nach einem der Ansprüche 9 oder 9, dadurch gekennzeichnet, daß der Schubschild (47) jeweils über 2 auf jeder Seite endseitig eines Trägers angeordnete Laufräder (44), vorzugsweise Laufräder (44) mit Spurkränzen, auf den Schienen (45) verfahrbar ist, wobei vorzugsweise die Laufräder (44) oben und unten in Schienen (45) geführt werden.
